# EUROPEAN PATENT APPLICATION

(11) **EP 4 478 297 A1**
(43) Date of publication of application: **18.12.2024**
(21) Application number: 24177342.3
(22) Date of filing: 22.05.2024
(51) Int. Cl.: G06V 10/141, G06V 20/52, G06V 40/20

(54) **INFORMATION PROCESSING PROGRAM, INFORMATION PROCESSING METHOD, AND INFORMATION PROCESSING DEVICE**

(30) Priority: 16.06.2023 JP 2023099399
(71) Applicant: FUJITSU LIMITED, Kawasaki-shi, Kanagawa 211-8588 (JP)
(72) Inventor: Kikuchi, Takashi, Kawasaki-shi, Kanagawa, 211-8588 (JP); Miyahara, Natsuki, Kawasaki-shi, Kanagawa, 211-8588 (JP); Endo, Arisu, Kawasaki-shi, Kanagawa, 211-8588 (JP); Kohata, Shun, Kawasaki-shi, Kanagawa, 211-8588 (JP)
(74) Representative: Hoffmann Eitle

(57) **Abstract**

An information processing program including instructions which, when executed by a computer, cause the computer to execute processing including: acquiring a video imaged in a facility; tracking a trajectory of a person in the facility, by analyzing the acquired video; generating a heat map regarding the trajectory of the person in the facility, based on the tracked trajectory of the person; generating information regarding environment setting in the facility, based on the generated heat map and position information of an electronic device disposed in the facility; and causing the electronic device to execute processing regarding the environment setting, based on the information regarding the environment setting.

## Description

### FIELD

The embodiments discussed herein are related to an information processing program and the like.

### BACKGROUND

In recent years, in various places such as outdoors, storefronts, public spaces, or transportation facilities, a medium called digital signage has been widespread that transmits information using a display of an electronic device or the like coupled to a network. Furthermore, not only in the public spaces, for example, but also in offices of companies, utilization of the digital signage has attracted attention for the purpose of supporting information sharing to employees, information control in the company, or the like.

Examples of the related art include Japanese Laid-open Patent Publication No. 2022-165483.

### SUMMARY

### TECHNICAL PROBLEM

Here, an electronic device receives content distributed by a server device and outputs the received content, through a network. However, there is a problem in that it is not possible to distribute content suitable for surrounding environment of a place where the electronic device is disposed. At this time, it is considered that the electronic device senses the surrounding environment where the electronic device is disposed, in order to identify surrounding environment of a place where an own device is disposed. However, in order to sense the surrounding environment, it is needed to mount a dedicated sensor on the electronic device. Therefore, in a case where no sensor is mounted on the electronic device, it is not possible for the electronic device to sense the surrounding environment.

In one aspect, an object is to provide an information processing program, an information processing method, and an information processing device that can operate an electronic device, in consideration of surrounding environment of a place where the electronic device is disposed.

### SOLUTION TO PROBLEM

According to an aspect of the embodiments, there is provided An information processing program including instructions which, when executed by a computer, cause the computer to execute processing including: acquiring a video imaged in a facility; tracking a trajectory of a person in the facility, by analyzing the acquired video; generating a heat map regarding the trajectory of the person in the facility, based on the tracked trajectory of the person; generating information regarding environment setting in the facility, based on the generated heat map and position information of an electronic device disposed in the facility; and causing the electronic device to execute processing regarding the environment setting, based on the information regarding the environment setting.

### ADVANTAGEOUS EFFECTS OF INVENTION

It is possible to operate an electronic device, in consideration of surrounding environment of a place where the electronic device is disposed.

### BRIEF DESCRIPTION OF DRAWINGS

FIG. 1 is a diagram illustrating an example of a system according to a first embodiment;
FIG. 2 is a diagram for explaining an example of processing of an information processing device according to the first embodiment;
FIG. 3 is a diagram illustrating an example of a heat map;
FIG. 4 is a diagram illustrating an example of a data structure of a generation policy table;
FIG. 5 is a functional block diagram illustrating a configuration of the information processing device according to the first embodiment;
FIG. 6 is a diagram illustrating an example of a data structure of a camera parameter table;
FIG. 7 is a diagram illustrating an example of a data structure of a video buffer;
FIG. 8 is a diagram illustrating an example of a first machine learning model;
FIG. 9 is a diagram illustrating an example of a data structure of a movement trajectory table;
FIG. 10 is a diagram illustrating an example of a data structure of an error database;
FIG. 11 is a diagram illustrating an example of a data structure of electronic device position information;
FIG. 12 is a diagram illustrating an example of a data structure of a product information table;
FIG. 13 is a flowchart illustrating a processing procedure of the information processing device according to the first embodiment;
FIG. 14 is a diagram for explaining an example of processing of an information processing device according to a second embodiment;
FIG. 15 is a diagram illustrating an example of a skeleton model of a human body;
FIG. 16 is a diagram illustrating an example of a joint name;
FIG. 17 is a diagram illustrating an example of a data structure of a rule table;
FIG. 18 is a diagram illustrating an example of a data structure of a training data table;
FIG. 19 is a functional block diagram illustrating a configuration of the information processing device according to the second embodiment;
FIG. 20 is a flowchart (1) illustrating a processing procedure of the information processing device according to the second embodiment;
FIG. 21 is a flowchart (2) illustrating a processing procedure of the information processing device according to the second embodiment; and
FIG. 22 is a diagram illustrating an example of a hardware configuration of a computer that implements functions similar to the information processing device according to the embodiments.

### DESCRIPTION OF EMBODIMENTS

Hereinafter, embodiments of an information processing program, an information processing method, and an information processing device disclosed in the present application will be described in detail with reference to the drawings. Note that the embodiments do not limit the present invention.

### [First Embodiment]

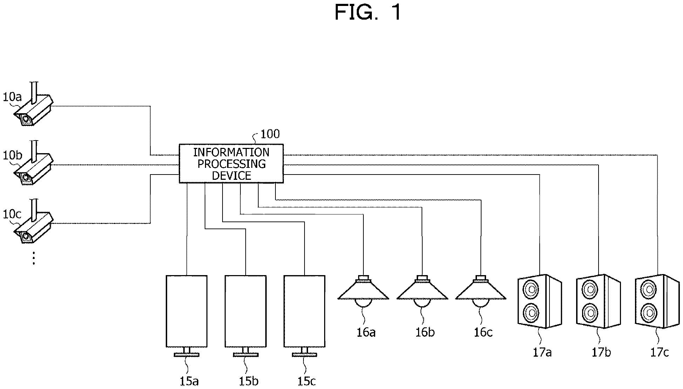

FIG. 1 is a diagram illustrating an example of a system according to the first embodiment. As illustrated in FIG. 1, the system according to the first embodiment includes cameras 10a, 10b, and 10c and an information processing device 100. Furthermore, the system according to the first embodiment includes display devices 15a, 15b, and 15c, illumination devices 16a, 16b, and 16c, and speakers 17a, 17b, and 17c.

The cameras 10a to 10c are mutually coupled to the information processing device 100 via a network. The display devices 15a to 15c, the illumination devices 16a to 16c, and the speakers 17a to 17c are mutually coupled to the information processing device 100 via the network.

In FIG. 1, for convenience of description, only the cameras 10a to 10c are illustrated. However, the system according to the first embodiment may include another camera. Similarly, although only the display devices 15a to 15c are illustrated, the system may include another display device. Although only the illumination devices 16a to 16c are illustrated, the system may include another illumination device. Although only the speakers 17a to 17c are illustrated, the system may include another speaker.

In the following description, the cameras 10a to 10c are appropriately and collectively referred to as a "camera 10". The display devices 15a to 15c are collectively referred to as a "display device 15". The illumination devices 16a to 16c are collectively referred to as an "illumination device 16". The speakers 17a to 17c are collectively referred to as a "speaker 17". Moreover, the display device 15, the illumination device 16, and the speaker 17 are collectively referred to as an "electronic device". Each of the camera 10 and the electronic devices is disposed at a predetermined position in a store and at a preset position.

The camera 10 images a video and transmits data of the imaged video to the information processing device 100. In the following description, the data of the video transmitted from the camera 10 to the information processing device 100 is referred to as "video data". In the first embodiment, description is made using video data in which a person is imaged.

The video data includes a plurality of time-series image frames. Frame numbers are assigned to the respective image frames in an ascending order of time series. One image frame is a still image imaged by the camera 10 at a certain timing. Time data may be added to each image frame. Camera identification information used to identify the camera 10 that has imaged the video data is set to the video data.

The information processing device 100 compares a movement trajectory of a person predicted from a past movement trajectory of a customer with an actual movement trajectory specified by analyzing the video data, based on the video data and generates a heat map indicating an error of each movement trajectory for each region.

The information processing device 100 generates information regarding environment setting based on the generated heat map and position information of the electronic device disposed in the store and causes the electronic device to execute processing regarding the generated environment setting.

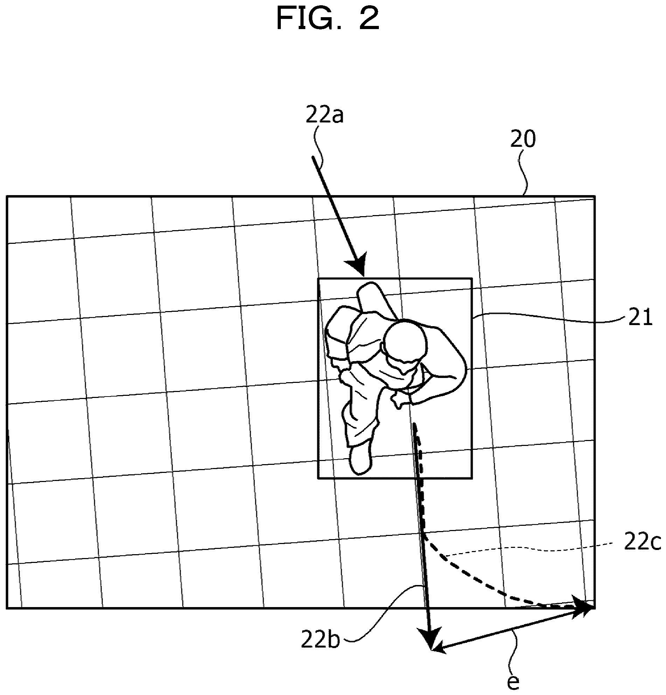

FIG. 2 is a diagram for explaining an example of processing of the information processing device according to the first embodiment. The information processing device 100 detects and tracks a region 21 of a person based on each image frame included in video data 20 and specifies a position of the person. The information processing device 100 acquires time-series position information of the person from a time t - n to a time t, by repeatedly executing the above processing on the image frames from the time t - n to the current time t. In the following description, the period from the time t - n to the time t is referred to as a "first period". The time-series position information of the person in the first period is referred to as a "first movement trajectory".

For example, in the first movement trajectory, time-series positions (coordinates) are set to be [(x_{t - n}, y_{t - n}), (x_{t - n + 1}, y_{t - n + 1}), ..., (xₜ, yₜ)]. In FIG. 2, the first movement trajectory is referred to as a first movement trajectory 22a. The time-series position of the first movement trajectory is associated with a time of the image frame.

The information processing device 100 predicts time-series position information of the person from a time t + 1 to a time t + m, by inputting the first movement trajectory into a trained first machine learning model. The first machine learning model is a long short term memory (LSTM), Transformer, or the like. In the following description, the period from the time t + 1 to the time t + m is referred to as a "second period". Time-series position information of the person in the second period, predicted by inputting the first movement trajectory into the trained first machine learning model is referred to as a "second movement trajectory".

For example, in the second movement trajectory, time-series positions (coordinates) are set to be [(x'_{t + 1}, y'_{t + 1}), ..., (x'_{t + m}, y_{t + m})]. In FIG. 2, the second movement trajectory is referred to as a second movement trajectory 22b. Note that a start position of the second movement trajectory may be set to "(x'ₜ, y'ₜ)".

The information processing device 100 acquires the time-series position information of the person from the time t + 1 to the time t + m, that is, actual position information, by detecting and tracking the region 21 of the person, for the image frames from the time t + 1 to the time t + m of the video data 20. In the following description, the time-series position information of the person from the time t + 1 to the time t + m, which is the actual position information is referred to as a "third movement trajectory".

For example, in the third movement trajectory, time-series positions (coordinates) are set to be [(x_{t + 1}, y_{t +1}), ..., (x_{t + m}, y_{t + m})]. In FIG. 2, the third movement trajectory is referred to as a third movement trajectory 22c. The time-series position of the third movement trajectory is associated with a time of the image frame. Note that a start position of the third movement trajectory may be set to "(xₜ, yₜ)".

The information processing device 100 calculates an error e between the second movement trajectory 22b and the third movement trajectory 22c. As the error e, an error between the second movement trajectory 22b and the third movement trajectory 22c at each time is set. For example, an error e_{t + 1} at the time t + 1 is set to be an error between (x'_{t + 1}, y'_{t + 1}) and (x_{t + 1}, y_{t + 1}).

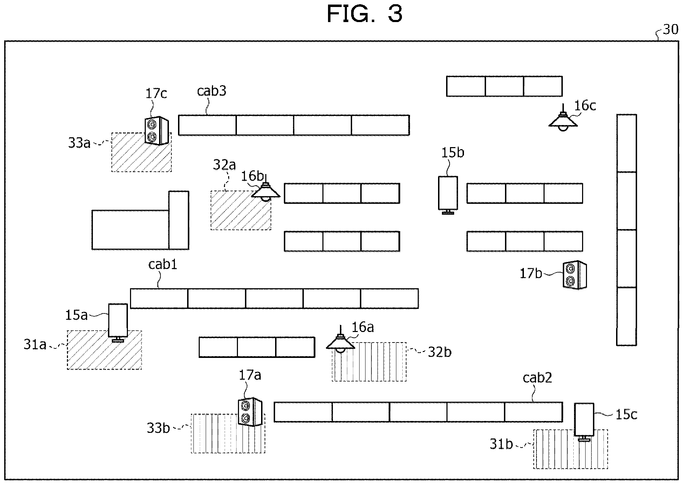

The information processing device 100 generates the heat map, based on the error e calculated by the processing in FIG. 2. FIG. 3 is a diagram illustrating an example of the heat map. For example, a heat map 30 is divided into a plurality of regions, and an integrated value of the error e for each predetermined period is set to each region. The information processing device 100 extracts a region of which the integrated value of the error e for each region is equal to or more than a threshold Th1, as an "attention region", based on the heat map 30. In the attention region, the customer is likely to move differently from usual due to some influence, and the attention region is a region that is likely to attract attention of the customer. A behavior different from a normal behavior is stopping or the like.

The information processing device 100 extracts a region of which the integrated value of the error e for each region is less than a threshold Th2, as a "non-attention region", based on the heat map 30. In the non-attention region, the customer is likely to perform a behavior similar to the normal behavior, and the non-attention region is a region that hardly attracts attention of the customer.

For example, the thresholds Th1 and Th2 are preset thresholds, and a magnitude relationship between the thresholds Th1 and Th2 is set as the threshold Th1 > the threshold Th2.

In the example illustrated in FIG. 3, the information processing device 100 extracts regions 31a, 32a, and 33a from among the plurality of regions of the heat map 30, as the attention regions. Furthermore, the information processing device 100 extracts regions 31b, 32b, and 33b as the non-attention regions. For convenience, the positions of the electronic devices (display device 15, illumination device 16, and speaker 17) in the heat map 30 are also displayed.

The information processing device 100 generates the information regarding the environment setting based on the heat map 30 and the position information of the electronic device disposed in the store and causes the electronic device to execute the processing regarding the environment setting. For example, the information processing device 100 generates environment setting information based on a generation policy table.

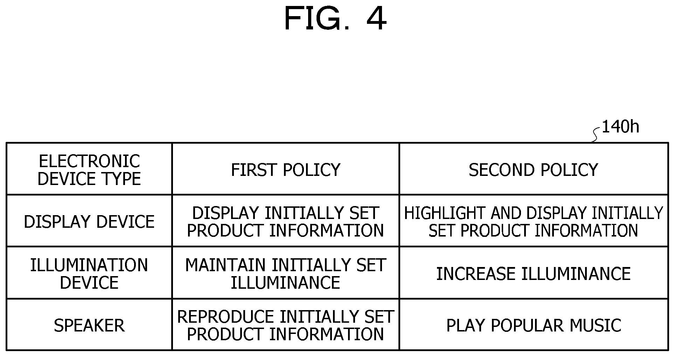

FIG. 4 is a diagram illustrating an example of a data structure of the generation policy table. As illustrated in FIG. 4, a generation policy table 140h associates an electronic device type, a first policy, and a second policy. The electronic device type indicates a type of an electronic device. For example, the type of the electronic device is any one of the display device, the illumination device, and the speaker. However, another type of electronic device may be set.

The first policy indicates a policy for generating information regarding environment setting set to the electronic device in a case where the electronic device is included in the attention region.

In FIG. 3, the display device 15a is positioned in the region 31a to be the attention region. The information processing device 100 generates information regarding environment setting of the display device 15a, based on a first policy "display initially set product information" of the electronic device type "display device". For example, the information processing device 100 generates information regarding a product disposed on a store shelf cab1 positioned near the display device 15a, which is the initially set product information and outputs the information to and displays the information on the display device 15a. By displaying the product information in a region that has already attracted attention, there is a high possibility that the customer refers to the product information. Note that the product information includes information such as a feature, an advantage, an added value, a price, a sales method, or the like of the product.

Note that the information processing device 100 may generate the product information using a trained second machine learning model. The second machine learning model is a model that outputs advertisement information of the product in a case where an image of the product is input. The information processing device 100 extracts an image of the product on the store shelf cab1 by analyzing an image frame of the region 31a imaged by the camera 10, and generates the product information by inputting the extracted image into the second machine learning model.

The illumination device 16b is positioned in the region 32a to be the attention region. The information processing device 100 generates information regarding environment setting of the illumination device 16b, based on a first policy "maintain initially set illuminance" of the electronic device type "illumination device". For example, the information processing device 100 generates an initially set illuminance parameter to the illumination device 16b and outputs the illuminance parameter to the illumination device 16b so as to control illumination of the illumination device 16b. Since the region has already attracted attention, the information processing device 100 maintains the illuminance of the illumination device 16b to be in an initial state.

The speaker 17c is positioned in the region 33a to be the attention region. The information processing device 100 generates information regarding environment setting of the speaker 17c, based on a first policy "reproduce initially set product information" of the electronic device type "speaker". For example, the information processing device 100 generates voice information that explains a product disposed on a store shelf cab3 positioned near the speaker 17c and outputs the voice information to the speaker 17c so as to cause the speaker 17c to reproduce the voice information that explains the product. Since the region has already attracted attention, it is possible to make the customer to listen to the voice information that explains the product, reproduced from the speaker 17c.

The second policy indicates a policy for generating environment setting information set to the electronic device in a case where the electronic device is included in the non-attention region.

In FIG. 3, the display device 15c is positioned in the region 31b to be the non-attention region. The information processing device 100 generates information regarding environment setting of the display device 15c, based on a second policy "highlight display initially set product information" of the electronic device type "display device". For example, the information processing device 100 generates initially set product information (highlight display) that is information regarding a product disposed on a store shelf cab2 positioned near the display device 15c and outputs the information to the display device 15a so as to display the information on the display device 15a. By highlighting and displaying the product information in a region that does not attract attention, there is a high possibility that the customer stops and refers to the product information. The information processing device 100 may highlight and display the product information in any way. However, the information processing device 100 highlights and displays the product information, for example, by blinking a frame of a screen of the product information.

Note that the information processing device 100 may generate the product information using the second machine learning model described above, update the generated product information for highlight display, and output the updated product information to the display device 15a so as to display the product information on the display device 15a.

The illumination device 16a is positioned in the region 32b to be the non-attention region. The information processing device 100 generates information regarding environment setting of the illumination device 16a, based on a second policy "increase illuminance" of the electronic device type "illumination device". For example, the information processing device 100 generates an illuminance parameter obtained by increasing an illuminance value only by a predetermined value from initial setting for the illumination device 16a, and outputs the illuminance parameter to the illumination device 16a, so as to control illumination of the illumination device 16a. By increasing the illuminance of the illumination device 16a so as to brighten the region that does not attract attention, the information processing device 100 can make it easier to view the product and improve an attention degree of the customer to the product.

The speaker 17a is positioned in the region 33b to be the non-attention region. The information processing device 100 generates information regarding environment setting of the speaker 17a, based on a second policy "play popular music" of the electronic device type "speaker". For example, the information processing device 100 causes the speaker 17a to reproduce the popular music by generating information regarding the popular music and outputting the information to the speaker 17a. By reproducing the popular music from the speaker 17a in the region that does not attract attention, it is possible to make the customer stop and view the product in the vicinity.

As described above, the information processing device 100 compares the movement trajectory of the person predicted from the past movement trajectory of the customer with the actual movement trajectory specified by analyzing the video data, based on the video data and generates the heat map indicating the error of each movement trajectory for each region. The information processing device 100 generates information regarding environment setting based on the heat map and the position information of the electronic device disposed in the store and causes the electronic device to execute processing regarding the generated environment setting. As a result, it is possible to operate the electronic device, in consideration of the surrounding environment of the place where the electronic device is disposed.

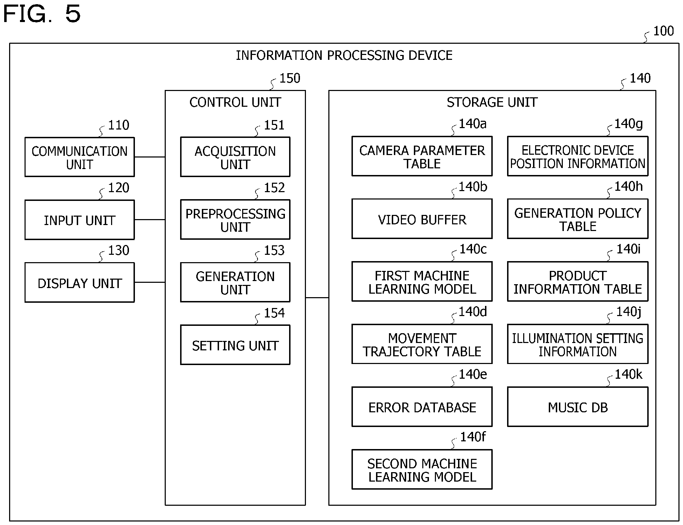

Next, a configuration example of the information processing device 100 described above will be described. FIG. 5 is a functional block diagram illustrating a configuration of the information processing device according to the first embodiment. As illustrated in FIG. 5, a communication unit 110, an input unit 120, a display unit 130, a storage unit 140, and a control unit 150 are included.

The communication unit 110 performs data communication with the camera 10, the display device 15, the illumination device 16, the speaker 17, an external device, or the like via a network. The communication unit 110 is a network interface card (NIC) or the like. For example, the communication unit 110 receives video data from the camera 10. The communication unit 110 transmits information regarding the environment setting generated by the control unit 150 to the display device 15, the illumination device 16, the speaker 17, or the like.

The input unit 120 is an input device that inputs various types of information to the control unit 150 of the information processing device 100. For example, the input unit 120 corresponds to a keyboard, a mouse, a touch panel, or the like.

The display unit 130 is a display device that displays the information output from the control unit 150.

The storage unit 140 includes a camera parameter table 140a, a video buffer 140b, a first machine learning model 140c, a movement trajectory table 140d, an error database 140e, and a second machine learning model 140f. Furthermore, the storage unit 140 includes electronic device position information 140g, the generation policy table 140h, a product information table 140i, illumination setting information 140j, and a music database (DB) 140k. The storage unit 140 is a storage device such as a memory.

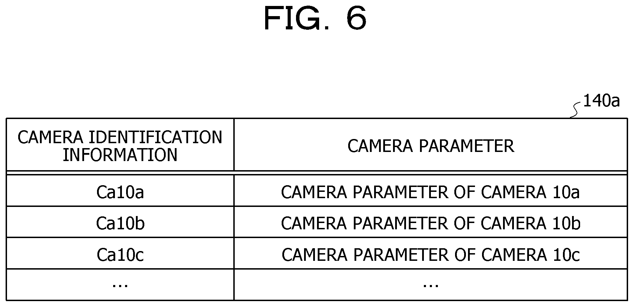

The camera parameter table 140a holds information regarding a camera parameter of the camera 10. FIG. 6 is a diagram illustrating an example of a data structure of the camera parameter table. As illustrated in FIG. 6, the camera parameter table 140a associates camera identification information with the camera parameter. Furthermore, the camera parameter table 140a may further hold information used to identify a region on a map corresponding to an imaging range of the camera 10.

The camera identification information is information used to identify the camera 10. For example, the pieces of camera identification information of the cameras 10a, 10b, and 10c are respectively set as Ca10a, Ca10b, and Ca10c. The camera parameter is a camera internal parameter, a camera external parameter, or the like. The camera parameter is preset based on calibration or the like.

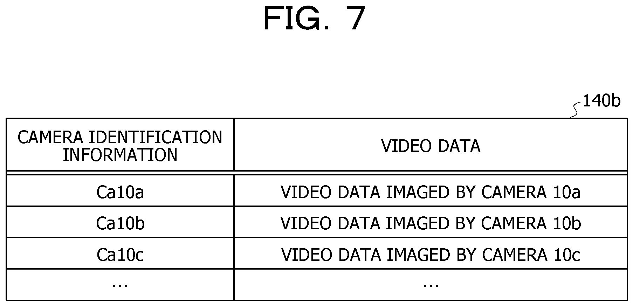

The video buffer 140b holds video data imaged by a camera. FIG. 7 is a diagram illustrating an example of a data structure of the video buffer. As illustrated in FIG. 7, the video buffer 140b associates the camera identification information with the video data. Description regarding the camera identification information and the video data is similar to the above description.

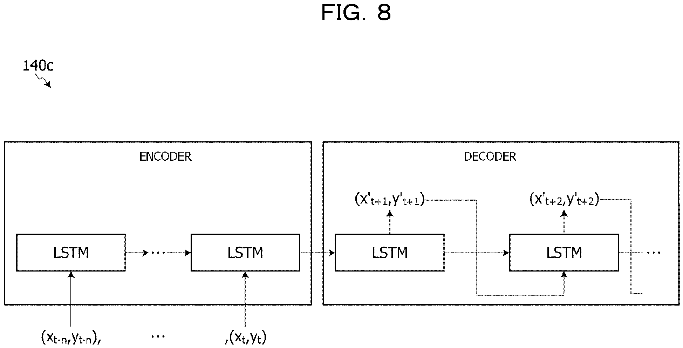

The first machine learning model 140c is a trained machine learning model having the first movement trajectory in the first period as an input and the second movement trajectory in the second period as an output. FIG. 8 is a diagram illustrating an example of the first machine learning model. As illustrated in FIG. 8, the first machine learning model 140c includes an encoder and a decoder. When the position information of the first movement trajectory is input in a LSTM of the encoder in a time-series manner, the information is input into the decoder, and the position information of the second movement trajectory is output from a LSTM of the decoder in a time-series manner. In FIG. 8, a case has been described where the first machine learning model 140c is implemented by the LSTM. However, Transformer or the like may be used instead.

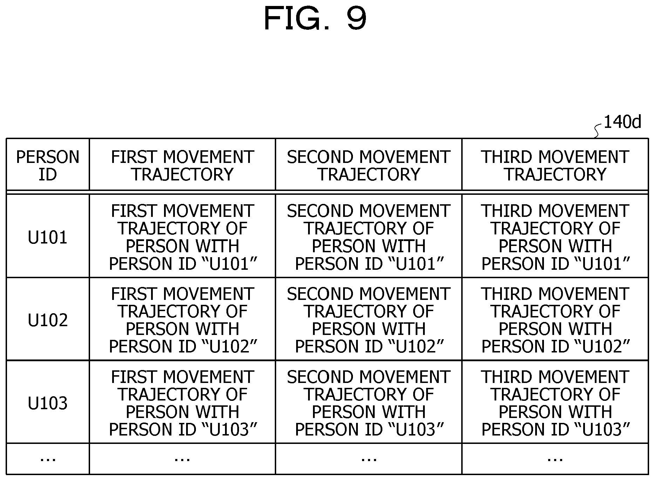

The movement trajectory table 140d holds information regarding each movement trajectory of a person. FIG. 9 is a diagram illustrating an example of a data structure of the movement trajectory table. As illustrated in FIG. 9, the movement trajectory table 140d associates a person identifier (ID), the first movement trajectory, the second movement trajectory, with the third movement trajectory. The person ID is identification information assigned to a person detected from the video data. Description of the first movement trajectory, the second movement trajectory, and the third movement trajectory is similar to the above description.

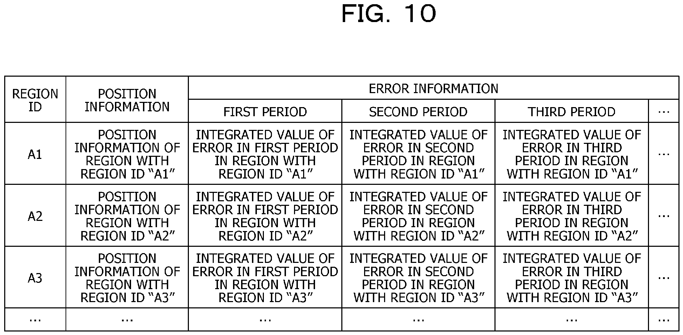

The error database 140e holds a relationship between each region on a map with an error in each predetermined period. The map is a map in the store. FIG. 10 is a diagram illustrating an example of a data structure of the error database. As illustrated in FIG. 10, the error database 140e associates a region ID, position information, with error information. The region ID is information used to identify a region in the store. The position information is position information of the region identified by the region ID. For example, in the position information, an upper left corner position of the region and a lower right corner position of the region are set.

In the error information, an integrated value of errors in each period in the region is set. For example, a first period to an N-th period are periods obtained by equally dividing 24 hours by N.

The second machine learning model 140f is a trained machine learning model having an image of a product as an input and advertisement information of the product as an output. The second machine learning model 140f is a neural network (NN) or the like.

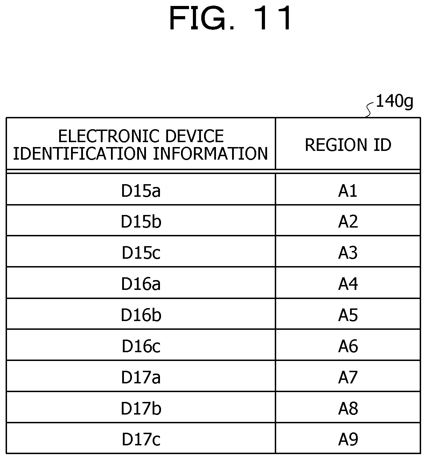

The electronic device position information 140g associates the identification information of the electronic device and the region ID of the region on the map in which the electronic device is provided. FIG. 11 is a diagram illustrating an example of a data structure of the electronic device position information. As illustrated in FIG. 11, the electronic device position information 140g associates the identification information of the electronic device with the region ID. For example, pieces of electronic device identification information D15a to D15c correspond to the display devices 15a to 15c. Pieces of electronic device identification information D16a to D16c correspond to the illumination devices 16a to 16c. Pieces of electronic device identification information D17a to D17c correspond to the speakers 17a to 17c.

The generation policy table 140h associates the electronic device type, the first policy, with the second policy. The data structure of the generation policy table 140h is the data structure described with reference to FIG. 4.

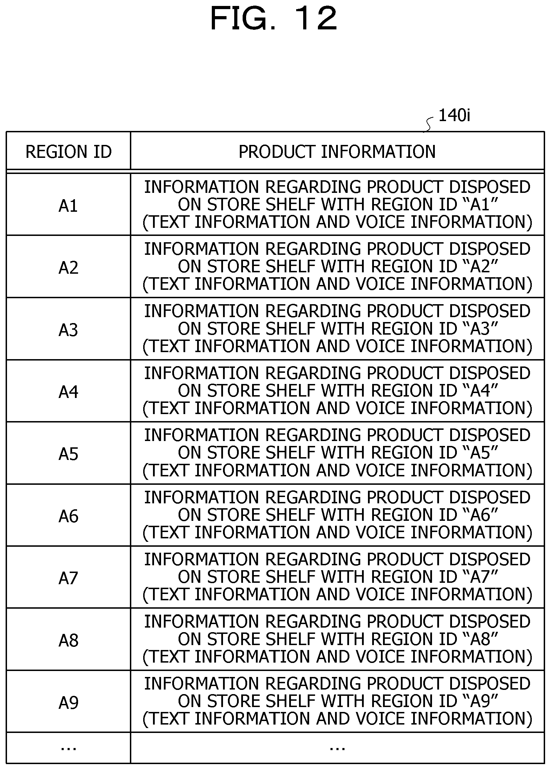

The product information table 140i holds the region ID of the region on the map and the information regarding the product disposed on the store shelf in the region. The product information includes information such as a feature, an advantage, an added value, a price, a sales method, or the like of the product. FIG. 12 is a diagram illustrating an example of a data structure of the product information table. As illustrated in FIG. 12, the product information table 140i associates a region ID with product information (text information and voice information). For example, the product information (text information) is advertisement information to be displayed on the display device 15. The product information (voice information) is voice information for explaining a product to be reproduced from the speaker 17.

The illumination setting information 140j holds an initially set illuminance parameter of the illumination device 16.

The music DB 140k stores information regarding popular music.

The description returns to FIG. 5. The control unit 150 includes an acquisition unit 151, a preprocessing unit 152, a generation unit 153, and a setting unit 154. The control unit 150 is a central processing unit (CPU), a graphics processing unit (GPU), or the like.

The acquisition unit 151 acquires video data from the camera 10. As described above, to the video data, the camera identification information of the camera 10 that has imaged the video data is set. The acquisition unit 151 stores the video data in the video buffer 140b, in association with the camera identification information.

The preprocessing unit 152 generates the error database 140e, by executing specifying processing, prediction processing, and calculation processing. Hereinafter, the specifying processing, the prediction processing, and the calculation processing will be described in order.

The specifying processing executed by the preprocessing unit 152 will be described. As described below, the first movement trajectory and the third movement trajectory are specified by the specifying processing.

The preprocessing unit 152 specifies the video data from the video buffer 140b, detects and tracks a region of a person based on each image frame included in the video data, and specifies a position of the person. The preprocessing unit 152 assigns a unique person ID to the same person. The preprocessing unit 152 specifies the time-series position of the person from the time t - n to the time t, by repeatedly executing the above processing on the image frames from the time t - n to the current time t and generates the first movement trajectory.

The preprocessing unit 152 associates the time-series position included in the first movement trajectory with the time, based on a time set to the image frame. In the following description, the first movement trajectory in which each of the time-series positions is associated with the time is simply referred to as the first movement trajectory. The preprocessing unit 152 stores the first movement trajectory in the movement trajectory table 140d, in association with the person ID.

Subsequently, the preprocessing unit 152 waits until the time t + m, after generating the first movement trajectory. The preprocessing unit 152 acquires video data from the time t + 1 to the time t + m from the video buffer 140b and detects and tracks the region of the person for the image frames from the time t + 1 to the time t + m so as to specify the time-series positions of the person from the time t + 1 to the time t + m and to generate the third movement trajectory.

The preprocessing unit 152 associates the time-series position included in the third movement trajectory with the time, based on the time set to the image frame. In the following description, the third movement trajectory in which each of the time-series positions is associated with the time is simply referred to as the third movement trajectory. The preprocessing unit 152 stores the third movement trajectory in the movement trajectory table 140d, in association with the person ID.

The preprocessing unit 152 similarly generates a first movement trajectory and a third movement trajectory regarding another person (person ID) based on the video data and stores the first movement trajectory and the third movement trajectory in the movement trajectory table 140d.

Here, in a case of detecting the region of the person included in the image frame, the preprocessing unit 152 may use a technology such as you look only once (YLOO). For example, the preprocessing unit 152 compares the regions of the person detected from the respective image frames and tracks the person by setting a region that satisfies a tracking condition as the region of the same person. The tracking condition includes a condition that a similarity of features of the region of the person is equal to or more than a threshold, a condition that a distance of the region of the person is less than a certain distance, or the like. Note that, in a case of detecting the region of the person included in each image frame of the video data and tracking the region of the person, the preprocessing unit 152 may use a machine learning model such as DeepSort.

Next, the prediction processing executed by the preprocessing unit 152 will be described. As described below, the second movement trajectory is predicted by the prediction processing.

The preprocessing unit 152 acquires the first movement trajectory from the movement trajectory table 140d and inputs the time-series position of the acquired first movement trajectory into the first machine learning model 140c so as to predict the second movement trajectory. The preprocessing unit 152 sets a person ID of the first movement trajectory used in a case where the second movement trajectory is predicted as a person ID of the second movement trajectory. The preprocessing unit 152 stores the second movement trajectory in the movement trajectory table 140d, in association with the person ID.

The preprocessing unit 152 similarly predicts a second movement trajectory of another person ID and stores the predicted second movement trajectory in the movement trajectory table 140d.

Next, the calculation processing executed by the preprocessing unit 152 will be described. In the calculation processing, a relationship between each region on the map and an error for each predetermined period is calculated based on the second movement trajectory and the third movement trajectory stored in the movement trajectory table 140d, and the error information in the error database 140e is updated. Hereinafter, an example of the calculation processing will be described.

The preprocessing unit 152 sets the error information of each region ID in the error database 140e to an initial value. For example, it is assumed that the initial value be zero (integrated value = 0).

The preprocessing unit 152 acquires a second movement trajectory and a third movement trajectory of the same person ID from the movement trajectory table 140d. The preprocessing unit 152 calculates an error e (xₜₙ, yₜₙ) between an n-th position of the second movement trajectory and an n-th position of the third movement trajectory. The preprocessing unit 152 compares the n-th position of the second movement trajectory, a time corresponding to the n-th position, position information in an error database 145, and a first period to an N-th period, specifies a target of which the error e (xₜₙ, yₜₙ) is integrated, and integrates the error e.

For example, it is assumed that the n-th position of the second movement trajectory be included in position information with a region ID "A1" and the time of the n-th position of the second movement trajectory be included in the first period. In this case, the preprocessing unit 152 integrates the error e (xₜₙ, yₜₙ) with the previous integrated value set to the "first period" with the region ID "A1".

The preprocessing unit 152 repeatedly executes the above processing for the n-th (n = 1 to M) position. Furthermore, the preprocessing unit 152 repeatedly executes the above processing, based on the second movement trajectory and the third movement trajectory of each person ID registered in the movement trajectory table 140d.

As described above, the preprocessing unit 152 executes the specifying processing, the prediction processing, and the calculation processing so as to generate the error database 140e. Here, the error database 140e is information in which each region on the map and the integrated value in each period of each region are associated and corresponds to the heat map.

The generation unit 153 generates information regarding environment setting in the store, based on the error database 140e corresponding to the heat map and the position information of the electronic device set to the electronic device position information 140g. For example, the generation unit 153 executes extraction processing and generation processing.

The extraction processing executed by the generation unit 153 will be described. By executing the extraction processing by the generation unit 153, a region ID of the region to be the attention region and a region ID of the region to be the non-attention region are extracted.

The generation unit 153 scans an integrated value in the first period to the N-th period included in a record of each region ID in the error database 145 and specifies a region ID of which the integrated value in any one period is equal to or more than the threshold Th1. The generation unit 153 extracts a region with the specified region ID as the attention region. Note that the generation unit 153 may extract a region with the region ID of which a maximum value or an average value of the integrated value in any one period is equal to or more than the threshold Th1, as the attention region. In the following description, the region ID of the region to be the attention region is appropriately referred to as an "attention region ID".

Furthermore, the generation unit 153 scans the integrated value in the first period to the N-th period in the record of each region ID in the error database 145 and specifies a region ID of which the integrated value in any one period is less than the threshold Th2. The generation unit 153 extracts a region with the specified region ID as the non-attention region. Note that the generation unit 153 may extract a region with the region ID of which a maximum value or an average value of the integrated value in any one period is less than the threshold Th2, as the non-attention region. In the following description, the region ID of the region to be the non-attention region is appropriately referred to as a "non-attention region ID".

Next, the generation processing executed by the generation unit 153 will be described.

The generation unit 153 specifies an electronic device disposed in the attention region, based on the attention region ID and the electronic device position information 140g. The generation unit 153 generates information regarding environment setting corresponding to the specified electronic device. Here, as an example, the processing of the generation unit 153 will be described as assuming the electronic device disposed in the attention region as the display device 15a, the illumination device 16b, and the speaker 17c illustrated in FIG. 3.

Processing of generating the information regarding the environment setting of the display device 15a by the generation unit 153 will be described. The generation unit 153 generates the information regarding the environment setting of the display device 15a, based on the first policy "display information initially set product information" of the electronic device type "display device", set to the generation policy table 140h.

For example, the generation unit 153 generates the information regarding the product disposed on the store shelf cab1 positioned near the display device 15a, based on the attention region ID of the region where the display device 15a is disposed and the product information table 140i.

Note that the generation unit 153 may generate the product information, using the second machine learning model 140f. The generation unit 153 extracts an image of the product disposed on the store shelf cab1, from the image frame of the camera 10 including the region with the attention region ID in which the display device 15a is disposed in an imaging range. The generation unit 153 generates the product information by inputting the extracted image of the product into the second machine learning model 140f.

The generation unit 153 outputs environment setting information (1-1) in which identification information of the display device 15a and the generated product information are associated, to the setting unit 154.

Processing of generating the information regarding the environment setting of the illumination device 16b by the generation unit 153 will be described. The generation unit 153 generates the information regarding the environment setting of the illumination device 16b, based on the first policy "maintain initially set illuminance" of the electronic device type "illumination device", set to the generation policy table 140h.

For example, the generation unit 153 generates an initially set illuminance parameter, regarding the illumination device 16b, based on the illumination setting information 140i.

The generation unit 153 outputs environment setting information (1-2) in which identification information of the illumination device 16b and the generated illuminance parameter are associated, to the setting unit 154.

Processing of generating the information regarding the environment setting of the speaker 17c by the generation unit 153 will be described. The generation unit 153 generates the information regarding the environment setting of the speaker 17c, based on the first policy "reproduce initially set product information" of the electronic device type "speaker", set to the generation policy table 140h.

For example, the generation unit 153 generates the information regarding the product (voice information) disposed on the store shelf cab3 positioned near the speaker 17c, based on the attention region ID where the speaker 17c is disposed and the product information table 140i.

The generation unit 153 outputs environment setting information (1-3) in which identification information of the speaker 17c and the generated product information (voice information) are associated, to the setting unit 154.

Subsequently, the generation unit 153 specifies the electronic device disposed in the non-attention region, based on the non-attention region ID and the electronic device position information 140g. The generation unit 153 generates information regarding environment setting corresponding to the specified electronic device. Here, as an example, the processing of the generation unit 153 will be described as assuming the electronic device disposed in the non-attention region as the display device 15c, the illumination device 16a, and the speaker 17a illustrated in FIG. 3.

Processing of generating the information regarding the environment setting of the display device 15c by the generation unit 153 will be described. The generation unit 153 generates the information regarding the environment setting of the display device 15c, based on the second policy "highlight and display initially set product information" of the electronic device type "display device", set to the generation policy table 140h.

For example, the generation unit 153 generates the information regarding the product disposed on the store shelf cab2 positioned near the display device 15c, based on the non-attention region ID of the region where the display device 15c is disposed and the product information table 140i.

Note that the generation unit 153 may generate the product information, using the second machine learning model 140f. The generation unit 153 extracts an image of the product disposed on the store shelf cab2, from the image frame of the camera 10 including a region with the non-attention region ID in which the display device 15c is disposed in an imaging range. The generation unit 153 generates the product information by inputting the extracted image of the product into the second machine learning model 140f.

The generation unit 153 sets information for executing highlight display such as blinking a frame of a screen of the product information, to the generated product information.

The generation unit 153 outputs environment setting information (2-1) in which identification information of the display device 15c and the generated product information (highlight display) are associated, to the setting unit 154.

Processing of generating the information regarding the environment setting of the illumination device 16a by the generation unit 153 will be described. The generation unit 153 generates the information regarding the environment setting of the illumination device 16a, based on the second policy "increase illuminance" of the electronic device type "illumination device", set to the generation policy table 140h.

For example, the generation unit 153 acquires an initially set illuminance parameter regarding the illumination device 16a, based on the illumination setting information 140i and generates an illuminance parameter obtained by increasing an illuminance value only by a predetermined value from the initial setting.

The generation unit 153 outputs environment setting information (2-2) in which identification information of the illumination device 16a and the generated illuminance parameter are associated, to the setting unit 154.

Processing of generating the information regarding the environment setting of the speaker 17a by the generation unit 153 will be described. The generation unit 153 generates the information regarding the environment setting of the speaker 17a, based on the second policy "play popular songs" of the electronic device type "speaker", set to the generation policy table 140h.

For example, the generation unit 153 acquires information regarding popular music, from the music DB 140k. The generation unit 153 outputs environment setting information (2-3) in which identification information of the speaker 17a and the information regarding the popular music are associated, to the setting unit 154.

The setting unit 154 acquires the environment setting information generated by the generation unit 153 and outputs the environment setting information to the electronic device set to the environment setting information so as to cause the electronic device to execute the processing regarding the environment setting.

For example, when receiving the environment setting information (1-1) from the generation unit 153, the setting unit 154 outputs and sets the environment setting information (1-1) to the display device 15a and causes the display device 15a to execute the processing regarding the environment setting. The display device 15a displays the product information in the environment setting information (1-1).

When receiving the environment setting information (1-2) from the generation unit 153, the setting unit 154 outputs and sets the environment setting information (1-2) to the illumination device 16b so as to cause the illumination device 16b to execute the processing regarding the environment setting. The illumination device 16b maintains the initially set illuminance based on the environment setting information (1-2).

When receiving the environment setting information (1-3) from the generation unit 153, the setting unit 154 outputs and sets the environment setting information (1-3) to the speaker 17c so as to cause the speaker 17c to execute the processing regarding the environment setting. The speaker 17c reproduces the product information (voice information) based on the environment setting information (1-3).

When receiving the environment setting information (2-1) from the generation unit 153, the setting unit 154 outputs and sets the environment setting information (2-1) to the display device 15c so as to cause the display device 15c to execute the processing regarding the environment setting. The display device 15c displays the product information and highlights and displays the product information, based on the environment setting information (2-1). For example, the display device 15c performs highlight display such as blinking the screen frame of the product information.

When receiving the environment setting information (2-2) from the generation unit 153, the setting unit 154 outputs and sets the environment setting information (2-2) to the illumination device 16a so as to cause the illumination device 16a to execute the processing regarding the environment setting. The illumination device 16a increases the illuminance value only by a predetermined value from the initially set illuminance value, based on the environment setting information (2-2).

When receiving the environment setting information (2-3) from the generation unit 153, the setting unit 154 outputs and sets the environment setting information (2-3) to the speaker 17a so as to cause the speaker 17a to execute the processing regarding the environment setting. The speaker 17a reproduces the popular music based on the environment setting information (2-3).

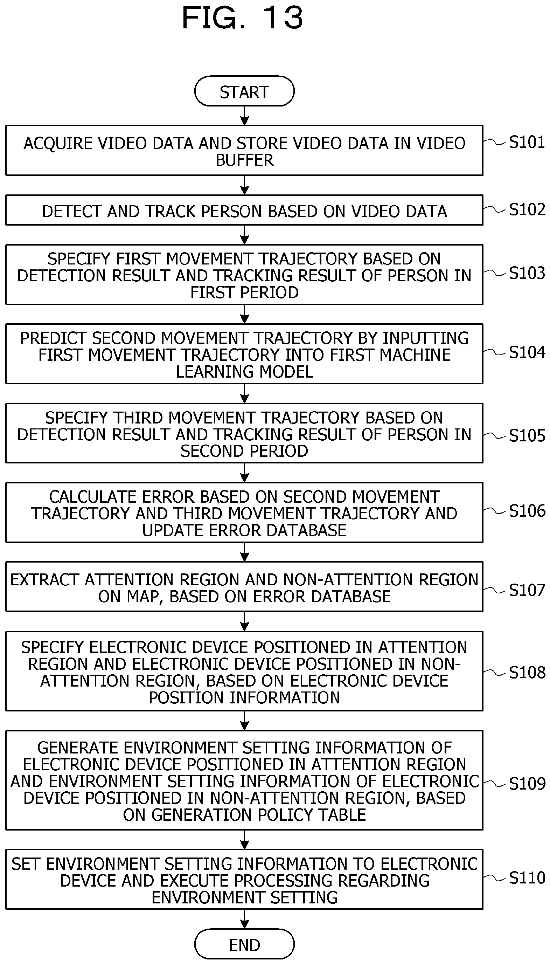

Next, a processing procedure of the information processing device 100 according to the first embodiment will be described. FIG. 13 is a flowchart illustrating a processing procedure of the information processing device according to the first embodiment. As illustrated in FIG. 13, the acquisition unit 151 of the information processing device 100 acquires the video data from the camera 10 and stores the video data in the video buffer 140b (step S101).

The preprocessing unit 152 of the information processing device 100 detects and tracks a person based on the video data (step S102). The preprocessing unit 152 specifies the first movement trajectory based on a detection result and a tracking result of the person in the first period (step S103).

The preprocessing unit 152 predicts the second movement trajectory by inputting the first movement trajectory into the first machine learning model 140c (step S104). The preprocessing unit 152 specifies the third movement trajectory, based on a detection result and a tracking result of the person in the second period (step S105).

The preprocessing unit 152 calculates an error based on the second movement trajectory and the third movement trajectory and updates the error database 140e (step S106).

The generation unit 153 of the information processing device 100 extracts the attention region and the non-attention region on the map, based on the error database 140e (step S107). The generation unit 153 specifies the electronic device positioned in the attention region and the electronic device positioned in the non-attention region, based on the electronic device position information 140g (step S108).

The generation unit 153 generates the environment setting information of the electronic device positioned in the attention region and the environment setting information of the electronic device positioned in the non-attention region, based on the generation policy table 140h (step S109).

The setting unit 154 of the information processing device 100 sets the environment setting information to the electronic device and causes the electronic device to execute the processing regarding the environment setting (step S110).

Next, effects of the information processing device 100 according to the first embodiment will be described. The information processing device 100 compares the movement trajectory of the person predicted from the past movement trajectory of the customer with the actual movement trajectory specified by analyzing the video data, based on the video data and generates the heat map (error database 140e) indicating the error of each movement trajectory for each region. The information processing device 100 generates information regarding environment setting based on the generated heat map and position information of the electronic device disposed in the store and causes the electronic device to execute processing regarding the generated environment setting. As a result, it is possible to operate the electronic device, in consideration of the surrounding environment of the place where the electronic device is disposed.

The information processing device 100 sets a type of content to be displayed on the display device 15, an illuminance of the illumination device 16, a type of music to be played by the speaker 17, as the information regarding the environment setting, and outputs the information to the electronic device. As a result, it is possible to improve product purchase willingness of the customer, using the display device, the illumination device, and the speaker.

The information processing device 100 specifies the first movement trajectory and the third movement trajectory based on the video data, inputs the first movement trajectory into the first machine learning model 140c, and predicts the second movement trajectory. The information processing device 100 generates the heat map (error database 140e) based on an error between the second movement trajectory and the third movement trajectory. As a result, it is possible to generate the heat map used to specify the attention region and the non-attention region.

By the way, in the first embodiment, the display device 15, the illumination device 16, and the speaker 17 are described as the electronic devices.

However, the processing may be executed using other electronic devices. For example, the information processing device 100 may use an electronic device that sprays perfume in the store, as the electronic device. In the following description, the electronic device that sprays the perfume in the store is referred to as a "perfume sprayer". The perfume sprayer is coupled to the information processing device 100, via the network or the like.

In a case where the perfume sprayer is positioned in the attention region, the information processing device 100 generates environment setting information for causing the perfume sprayer to spray a perfume of a first type and outputs and sets the environment setting information to the perfume sprayer. On the other hand, in a case where the perfume sprayer is positioned in the non-attention region, the information processing device 100 generates environment setting information for causing the perfume sprayer to spray a perfume of a second type and outputs and sets the environment setting information to the perfume sprayer.

In the perfume sprayer, a tank of the perfume of the first type and a tank of the perfume of the second type are set in advance, and the perfume sprayer sprays the perfume based on the environment setting information set by the information processing device 100. Note that the perfumes of the first type and the second type are selected by an administrator in advance.

### [Second Embodiment]

Next, a second embodiment will be described. A system according to the second embodiment is similar to the system described with reference to FIG. 1. An information processing device according to the second embodiment is referred to as an "information processing device 200". The information processing device 200 executes the following processing, in addition to the processing of the information processing device 100 described above.

The information processing device 200 specifies an attention region on a map based on a heat map and extracts a region of a person in the attention region from video data of a camera 10 including the attention region in an imaging range. Here, the attention region is a region corresponding to the attention region ID described above. It is assumed that the information processing device 200 hold information regarding the imaging range (region on map) of the camera 10.

The information processing device 200 generates skeleton information of the person by analyzing an image of the region of the person included in the video data and specifies a behavior of the person, based on the skeleton information. The information processing device 200 generates information regarding environment setting associated with a predetermined behavior in a case where the behavior of the person is the predetermined behavior, and outputs and sets the generated information regarding the environment setting to an electronic device positioned in the attention region so as to cause the electronic device to execute processing regarding the environment setting.

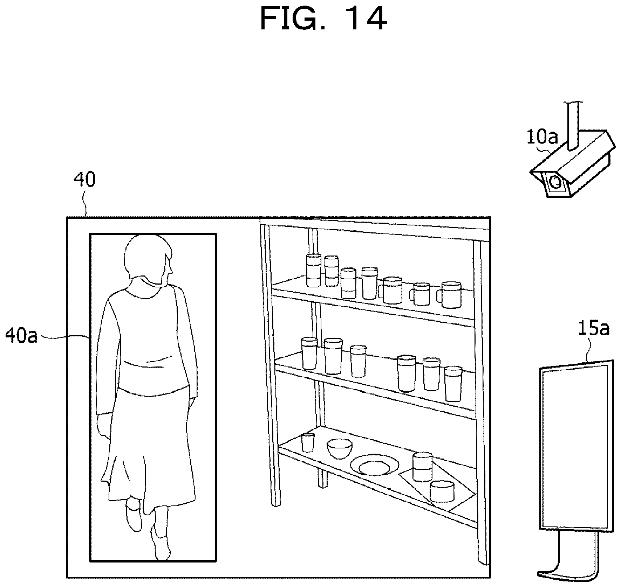

FIG. 14 is a diagram for explaining an example of processing of the information processing device according to the second embodiment. In the example illustrated in FIG. 14, it is assumed that video data imaged by a camera 10a include the attention region. The information processing device 200 extracts a region 40a including a customer, by analyzing video data 40. Note that it is assumed that a display device 15a be set to the attention region.

The information processing device 200 generates skeleton information of the customer by inputting an image of the region 40a including the customer into a trained third machine learning model. The third machine learning model is a machine learning model that uses the image of the person as an input and the skeleton information as an output. For example, the third machine learning model is a NN or the like.

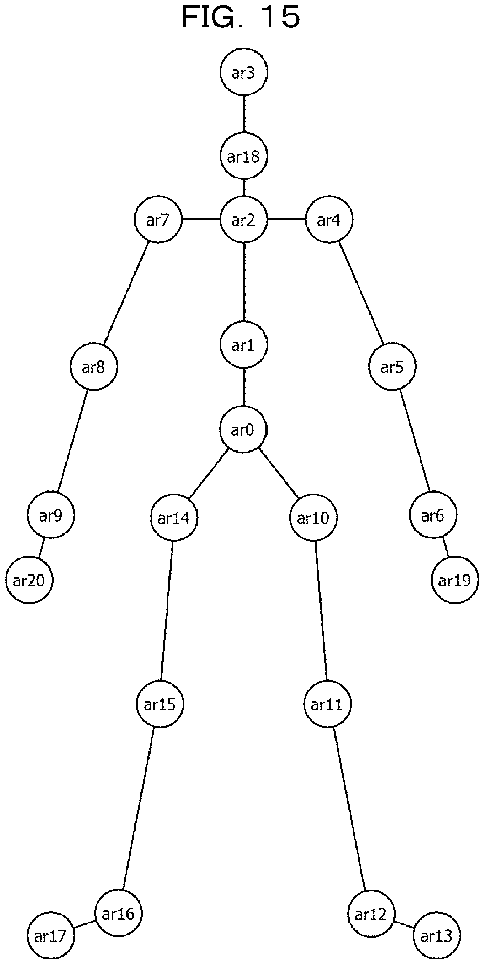

The skeleton information is data in which two-dimensional or three-dimensional coordinates are set to a plurality of joints defined by a skeleton model of a human body. Here, coordinates of each joint in skeleton data are set as two-dimensional coordinates. FIG. 15 is a diagram illustrating an example of the skeleton model of the human body. For example, as illustrated in FIG. 15, the skeleton model of the human body is defined by 21 joints ar0 to ar20.

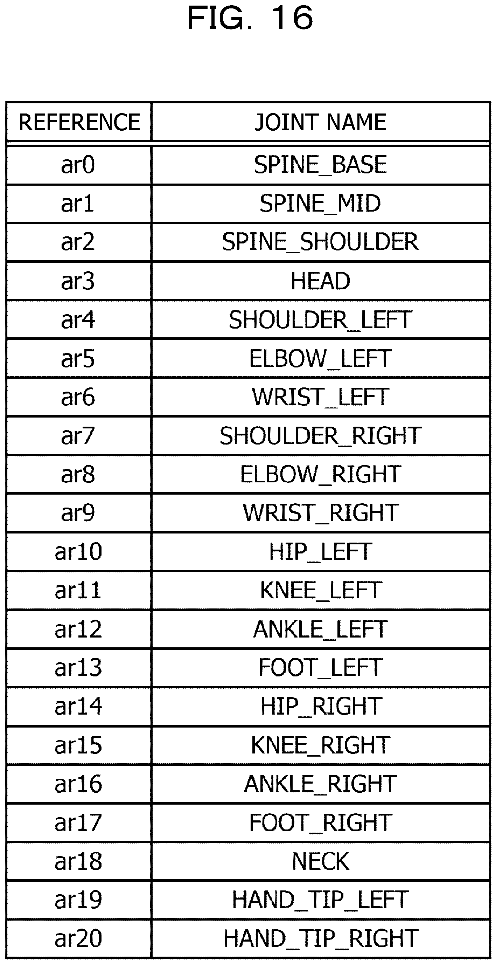

A relationship between each of the joints ar0 to ar20 illustrated in FIG. 15 and a joint name is as illustrated in FIG. 16. FIG. 16 is a diagram illustrating an example of the joint name. For example, the joint name of the joint ar0 is "SPINE_BASE". The joint names of the joints ar1 to a20 are as illustrated in FIG. 16, and description thereof is omitted.

The information processing device 200 generates time-series skeleton information by inputting images of the region of the customer extracted from time-series image frames into the third machine learning model in order. The information processing device 200 specifies a behavior of the customer, based on the generated time-series skeleton information and a rule table. For example, the rule table is a table that defines a relationship between a transition of a position of a predetermined joint in the skeleton information and a type of the behavior of the person. The predetermined joint is set in advance.

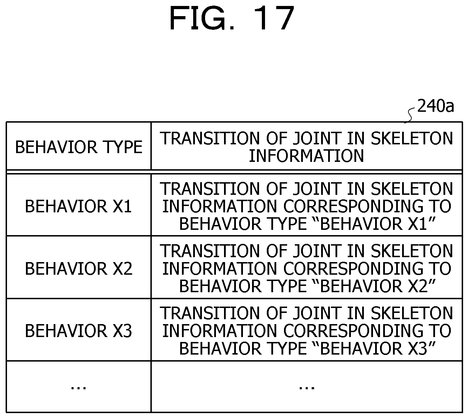

FIG. 17 is a diagram illustrating an example of a data structure of the rule table. As illustrated in FIG. 17, a rule table 240a associates a behavior type with a transition of a position of a joint in the skeleton information. In the example illustrated in FIG. 17, as the behavior type, a "behavior X1", a "behavior X2", and a "behavior X3" are illustrated. However, other behavior types may be registered. The behavior type includes watching, touching, grasping, sitting, or the like.

In a case where the behavior type specified based on the rule table 240a is a predetermined behavior type, the information processing device 200 causes the electronic device positioned in the attention region to execute processing regarding environment setting associated with the predetermined behavior. The predetermined behavior type is set in advance.

For example, in a case where the specified behavior type is the "behavior X1", the information processing device 200 generates information regarding the environment setting, by inputting information regarding the behavior type "behavior X1" into a fourth machine learning model. The fourth machine learning model is a machine learning model that uses the behavior type of the person as an input and the information regarding the environment setting as an output. The fourth machine learning model is a NN or the like.

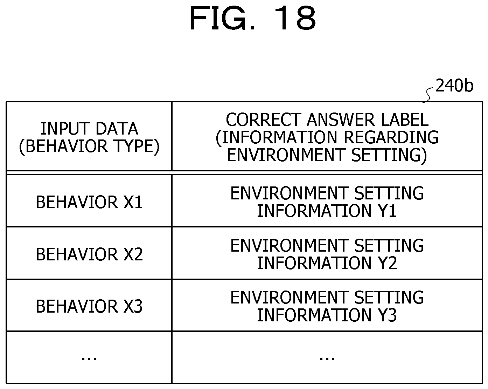

Note that it is assumed that the information processing device 200 hold a training data table 240b including a plurality of pieces of training data used in a case where the fourth machine learning model is trained, in a storage unit. FIG. 18 is a diagram illustrating an example of a data structure of the training data table. As illustrated in FIG. 18, the training data table 240b associates input data with a correct answer label. For example, the input data is information regarding the behavior type. The correct answer label is information regarding the environment setting.

The information processing device 200 sets the generated information regarding the environment setting to the display device 15a and causes the display device 15a to execute the processing regarding the environment setting. For example, the information processing device 200 sets advertisement information of a product to the display device 15a as the information regarding the environment setting and causes the display device 15a to display the advertisement information of the product.

Subsequently, by executing the processing similar to the processing described with reference to FIG. 14, after causing the display device 15a to execute the processing regarding the environment setting, the information processing device 200 specifies the behavior type of the person from the video data video imaged by the camera 10a. Here, a behavior type of the person before causing the display device 15a to execute the processing regarding the environment setting is set as a "first behavior type". A behavior type of the person after causing the display device 15a to execute the processing regarding the environment setting is set as a "second behavior type".

In a case where the second behavior type is not included in the preset behavior type, the information processing device 200 specifies the first behavior type and information regarding the environment setting output when the first behavior type is input into the fourth machine learning model. The information processing device 200 executes processing of excluding training data corresponding to a pair of the specified first behavior type and the information regarding the environment setting from the training data table 240b.

The information processing device 200 updates the training data table 240b, by repeatedly executing the above processing. The information processing device 200 retrains the fourth machine learning model, using the updated training data table 240b.

As described above, the information processing device 200 generates the skeleton information of the person by analyzing the image of the region of the person included in the video data and specifies the behavior of the person, based on the skeleton information. The information processing device 200 generates information regarding environment setting associated with a predetermined behavior in a case where the behavior of the person is the predetermined behavior, and outputs and sets the generated information regarding the environment setting to an electronic device positioned in the attention region so as to cause the electronic device to execute processing regarding the environment setting. As a result, it is possible to generate information regarding the environment setting suitable for the predetermined behavior.

Furthermore, in a case where the second behavior type is not included in the preset behavior type, the information processing device 200 specifies the first behavior type and the information regarding the environment setting output when the first behavior type is input into the fourth machine learning model. The information processing device 200 excludes the training data corresponding to the pair of the specified first behavior type and the information regarding the environment setting from the training data table 240b. As a result, a relationship between a behavior type that can stimulate a purchasing behavior of the customer and the information regarding the environment setting can be left in the training data table 240b, and it is possible to appropriately retrain the fourth machine learning model.

Note that, in a case where the transition from the first behavior type to the second behavior type is not a preset transition, the information processing device 200 may exclude training data corresponding to a pair of the first behavior type and the information regarding the environment setting output when the first behavior type is input into the fourth machine learning model, from the training data table 240b. The transition from the first behavior type to the second behavior type is a transition for approaching the purchasing behavior. For example, the preset transition from the first behavior type to the second behavior type is a transition from a behavior type "watching" to a behavior type "grasping".

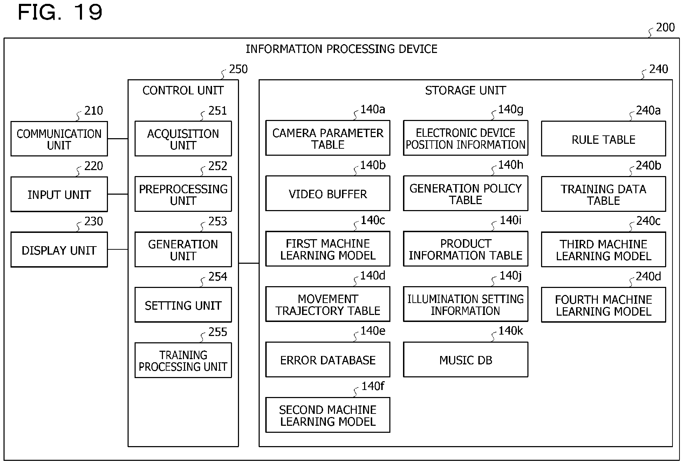

Next, a configuration example of the above-described information processing device 200 will be described. FIG. 19 is a functional block diagram illustrating the configuration of the information processing device according to the second embodiment. As illustrated in FIG. 19, a communication unit 210, an input unit 220, a display unit 230, a storage unit 240, and a control unit 250 are included.

Description regarding the communication unit 210, the input unit 220, and the display unit 230 is similar to the description regarding the communication unit 110, the input unit 120, and the display unit 130 described in the first embodiment.

The storage unit 240 includes a camera parameter table 140a, a video buffer 140b, a first machine learning model 140c, a movement trajectory table 140d, an error database 140e, and a second machine learning model 140f. Furthermore, the storage unit 240 includes electronic device position information 140g, the generation policy table 140h, a product information table 140i, illumination setting information 140j, and a music DB 140k. Furthermore, the storage unit 240 includes a rule table 240a, a training data table 240b, a third machine learning model 240c, and a fourth machine learning model 240d. The storage unit 240 is a storage device such as a memory.

Description regarding the camera parameter table 140a, the video buffer 140b, the first machine learning model 140c, the movement trajectory table 140d, the error database 140e, and the second machine learning model 140f is similar to the description in the first embodiment. Description regarding the electronic device position information 140g, the generation policy table 140h, the product information table 140i, the illumination setting information 140j, and the music DB 140k is similar to the description in the first embodiment.

The rule table 240a associates the behavior type with the transition of the position of the joint in the skeleton information. A data structure of the rule table 240a corresponds to the data structure described with reference to FIG. 17.

The training data table 240b holds the plurality of pieces of training data used in a case where the fourth machine learning model 240d is trained. A data structure of the training data table 240b corresponds to the data structure described with reference to FIG. 18.

The third machine learning model 240c is a machine learning model that uses the image of the person as an input and the skeleton information as an output.

The fourth machine learning model 240d is a machine learning model that uses the behavior type of the person as an input and the information regarding the environment setting as an output.

Subsequently, the control unit 250 will be described. The control unit 250 includes an acquisition unit 251, a preprocessing unit 252, a generation unit 253, a setting unit 254, and a training processing unit 255. The control unit 250 is a CPU, a GPU, or the like.

The acquisition unit 251 acquires the video data from the camera 10. As described above, to the video data, the camera identification information of the camera 10 that has imaged the video data is set. The acquisition unit 251 stores the video data in the video buffer 140b, in association with the camera identification information.

The preprocessing unit 252 generates an error database 240e, by executing specifying processing, prediction processing, and calculation processing. The specifying processing, the prediction processing, and the calculation processing executed by the preprocessing unit 252 are similar to the processing executed by the preprocessing unit 152 described in the first embodiment.

The generation unit 253 generates information regarding environment setting in the store, based on the error database 140e corresponding to the heat map and position information of the electronic device set to the electronic device position information 140g. For example, the generation unit 253 executes extraction processing and generation processing.

The extraction processing executed by the generation unit 253 is similar to the extraction processing extracted by the generation unit 153 described in the first embodiment. For example, an attention region ID and a non-attention ID are executed by the extraction processing executed by the generation unit 253.

Next, the generation processing executed by the generation unit 253 will be described.

The generation unit 253 specifies an electronic device disposed in the attention region, based on the attention region ID and the electronic device position information 140g. Furthermore, the generation unit 253 specifies the camera 10 including the attention region in the imaging range, based on the attention region ID and the camera parameter table 140a. The generation unit 253 generates information regarding environment setting corresponding to the specified electronic device.

The generation unit 253 generates the information regarding the environment setting corresponding to the electronic device, by executing the processing described with reference to FIG. 14. For example, the generation unit 253 acquires the video data (video data 40) of the camera including the attention region in the imaging range, from the video buffer 140b. The generation unit 253 extracts the region 40a including the customer, from each image frame, by analyzing the acquired video data 40. The generation unit 253 may extract a region including a customer, using the technology such as human-object interaction detection (HOID).

The generation unit 253 generates time-series skeleton information, by inputting the image of the region 40a including the customer of the time-series image frame into the trained third machine learning model 240c. The generation unit 253 specifies a first behavior type of the customer, based on the transition of the position of the predetermined joint in the time-series skeleton information and the rule table 240a.

In a case where the specified first behavior type is the predetermined behavior type, the generation unit 253 generates the information regarding the environment setting, by inputting information regarding the first behavior type into the fourth machine learning model 240d. The generation unit 253 outputs environment setting information in which the type of the electronic device and the information regarding the environment setting are associated, to the setting unit 254.

After executing the processing regarding the environment setting by the electronic device, as described with reference to FIG. 14, the generation unit 253 specifies a second behavior type of the customer from the video data video imaged by the camera 10a. In a case where the second behavior type is not included in the preset behavior type, the generation unit 253 specifies the first behavior type and the information regarding the environment setting output when the first behavior type is input into the fourth machine learning model 240d. The generation unit 253 excludes the training data corresponding to the pair of the specified first behavior type and the information regarding the environment setting from the training data table 240b.

The generation unit 253 updates the training data table 240b, by repeatedly executing the above processing.

By the way, in a case where the specified first behavior type is not the predetermined behavior, the generation unit 253 may generate the environment setting information by executing the processing similar to the generation unit 153 described in the first embodiment and output the environment setting information to the setting unit 254.

The setting unit 254 acquires the environment setting information generated by the generation unit 253 and outputs the environment setting information to the electronic device set to the environment setting information so as to cause the electronic device to execute the processing regarding the environment setting. Other processing regarding the setting unit 254 is similar to the processing regarding the setting unit 254 described in the first embodiment.

The training processing unit 255 retrains the fourth machine learning model 240d, based on the plurality of pieces of training data included in the training data table 240b updated by the generation unit 253. For example, the training processing unit 255 updates a parameter of the fourth machine learning model 240d, using the back propagation method.

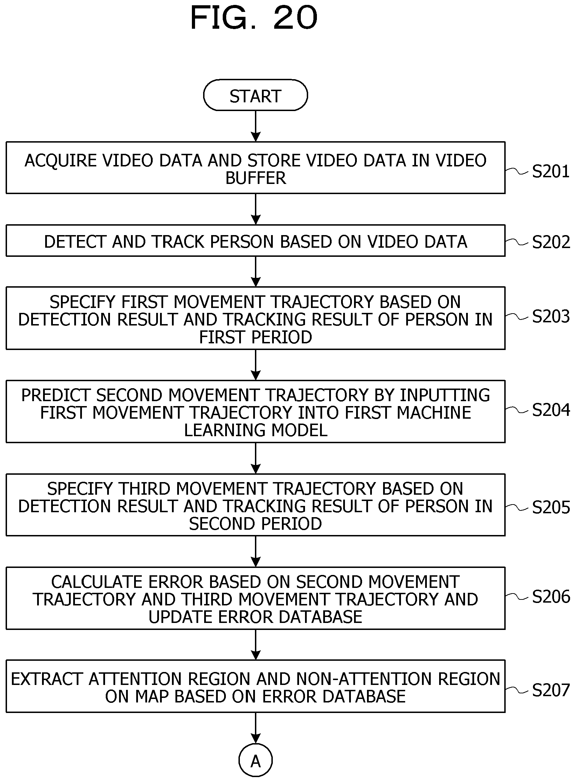

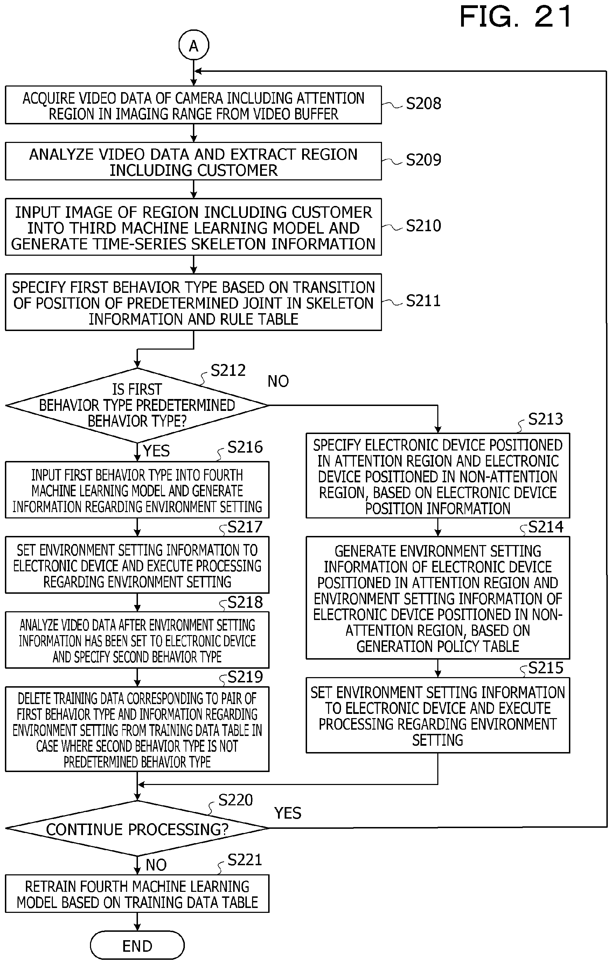

Next, a processing procedure of the information processing device 200 according to the second embodiment will be described. FIGs. 20 and 21 are flowcharts illustrating the processing procedure of the information processing device according to the second embodiment. FIG. 20 will be described. As illustrated in FIG. 20, the acquisition unit 251 of the information processing device 200 acquires the video data from the camera 10 and stores the video data in the video buffer 140b (step S201).

The preprocessing unit 252 of the information processing device 200 detects and tracks the person based on the video data (step S202). The preprocessing unit 252 specifies the first movement trajectory based on the detection result and the tracking result of the person in the first period (step S203).

The preprocessing unit 252 predicts the second movement trajectory by inputting the first movement trajectory into the first machine learning model 140c (step S204). The preprocessing unit 252 specifies the third movement trajectory, based on the detection result and the tracking result of the person in the second period (step S205).

The preprocessing unit 252 calculates an error based on the second movement trajectory and the third movement trajectory and updates the error database 140e (step S206).

The generation unit 253 of the information processing device 200 extracts the attention region and the non-attention region on the map based on the error database 140e (step S207) and proceeds to step S208 in FIG. 21.

Description of FIG. 21 will be made. The generation unit 253 acquires the video data of the camera 10 including the attention region in the imaging range from the video buffer 140b (step S208). The generation unit 253 analyzes the video data and extracts a region including a customer (step S209).

The generation unit 253 inputs images of the region including the customer into the third machine learning model 240c in order and generates time-series skeleton information (step S210). The generation unit 253 specifies the first behavior type based on the transition of the position of the predetermined joint in the skeleton information and the rule table 240a (step S211).

In a case where the first behavior type is not the predetermined behavior type (step S212, No), the generation unit 253 proceeds to step S213. The generation unit 253 specifies the electronic device positioned in the attention region and the electronic device positioned in the non-attention region, based on the electronic device position information 140g (step S213).

The generation unit 253 generates the environment setting information of the electronic device positioned in the attention region and the environment setting information of the electronic device positioned in the non-attention region, based on the generation policy table 140h (step S214). The setting unit 254 of the information processing device 200 sets the environment setting information to the electronic device and causes the electronic device to execute the processing regarding the environment setting (step S215) and proceeds to step S220.

On the other hand, in a case where the first behavior type is the predetermined behavior type (step S212, Yes), the generation unit 253 proceeds to step S216. The generation unit 253 inputs the first behavior type into the fourth machine learning model 240d and generates the information regarding the environment setting (step S216).

The generation unit 253 sets the environment setting information to the electronic device and causes the electronic device to execute the processing regarding the environment setting (step S217). The generation unit 253 analyzes the video data after the environment setting information has been set to the electronic device and specifies the second behavior type (step S218).

In a case where the first behavior type to the second behavior type are not the predetermined behavior type, the generation unit 253 deletes the training data corresponding to the pair of the first behavior type and the information regarding the environment setting from the training data table 240b (step S219).

In a case of continuing the processing (step S220, Yes), the information processing device 200 proceeds to step S208. In a case of not continuing the processing (step S220, No), the information processing device 200 proceeds to step S221. The training processing unit 255 of the information processing device 200 retrains the fourth machine learning model, based on the training data table 240b (step S221).

Next, effects of the information processing device 200 according to the second embodiment will be described. The information processing device 200 generates skeleton information of the person by analyzing an image of the region of the person included in the video data and specifies a behavior of the person, based on the skeleton information. The information processing device 200 generates information regarding environment setting associated with a predetermined behavior in a case where the behavior of the person is the predetermined behavior, and outputs and sets the generated information regarding the environment setting to an electronic device positioned in the attention region so as to cause the electronic device to execute processing regarding the environment setting. As a result, it is possible to generate information regarding the environment setting suitable for the predetermined behavior.

Furthermore, in a case where the second behavior type is not included in the preset behavior type, the information processing device 200 specifies the first behavior type and the information regarding the environment setting output when the first behavior type is input into the fourth machine learning model. The information processing device 200 excludes the training data corresponding to the pair of the specified first behavior type and the information regarding the environment setting from the training data table 240b. As a result, a relationship between a behavior type that can stimulate a purchasing behavior of the customer and the information regarding the environment setting can be left in the training data table 240b, and it is possible to appropriately retrain the fourth machine learning model.

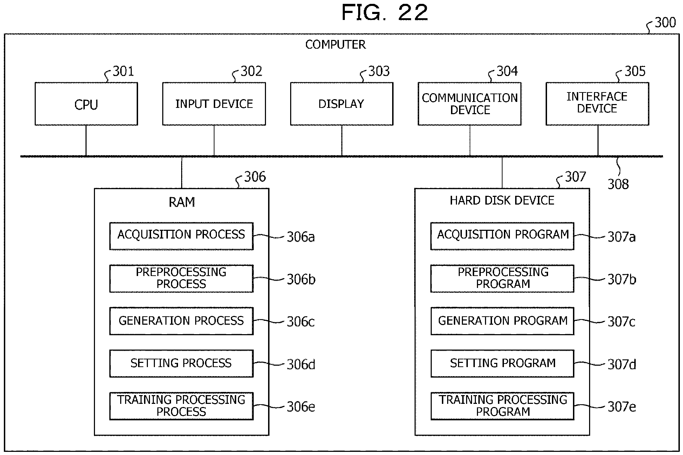

Next, an example of a hardware configuration of a computer that implements functions similar to those of the information processing devices 100 and 200 described above will be described. FIG. 22 is a diagram illustrating an example of the hardware configuration of the computer that implements the functions similar to those of the information processing device according to the embodiment.

As illustrated in FIG. 22, a computer 300 includes a CPU 301 that executes various types of arithmetic processing, an input device 302 that receives data input from a user, and a display 303. Furthermore, the computer 300 includes a communication device 304 that exchanges data with an external device or the like via a wired or wireless network, and an interface device 305. Furthermore, the computer 300 includes a random access memory (RAM) 306 that temporarily stores various types of information, and a hard disk device 307. Then, each of the devices 301 to 307 is coupled to a bus 308.

The hard disk device 307 includes an acquisition program 307a, a preprocessing program 307b, a generation program 307c, a setting program 307d, and a training processing program 307e. Furthermore, the CPU 301 reads each of the programs 307a to 307d, and loads it in the RAM 306.

The acquisition program 307a functions as an acquisition process 306a. The preprocessing program 307b functions as a preprocessing process 306b. The generation program 307c functions as a generation process 306c. The setting program 307d functions as a setting process 306d. The training processing program 307e functions as a training processing process 306e.

The processing of the acquisition process 206a corresponds to the processing of the acquisition units 151 and 251. Processing of the preprocessing process 306b corresponds to the processing of the preprocessing units 152 and 252. Processing of the generation process 306c corresponds to the processing of the generation units 153 and 253. Processing of the setting process 306d corresponds to the processing of the setting units 154 and 254. Processing of the training processing process 306e corresponds to the processing of the training processing unit 255.

Note that each of the programs 307a to 307e does not necessarily have to be stored in the hard disk device 307 previously. For example, each of the programs is stored beforehand in a "portable physical medium" to be inserted in the computer 300, such as a flexible disk (FD), a compact disc read only memory (CD-ROM), a digital versatile disc (DVD), a magneto-optical disk, or an integrated circuit (IC) card. Then, the computer 300 may read and execute each of the programs 307a to 307e.

## Claims

1. An information processing program comprising instructions which, when executed by a computer, cause the computer to execute processing comprising:
acquiring a video imaged in a facility;
tracking a trajectory of a person in the facility, by analyzing the acquired video;
generating a heat map regarding the trajectory of the person in the facility, based on the tracked trajectory of the person;
generating information regarding environment setting in the facility, based on the generated heat map and position information of an electronic device disposed in the facility; and
causing the electronic device to execute processing regarding the environment setting, based on the information regarding the environment setting.

2. The information processing program according to claim 1, wherein the information regarding the environment setting is any one of a type of content to be displayed on the electronic device, an illuminance of an illumination device disposed in the facility, a type of music played in the facility by the electronic device, and a type of a perfume to be sprayed in the facility by the electronic device.

3. The information processing program according to claim 1, wherein the processing of analyzing specifies a first movement trajectory of the person in a first period, included in the acquired video, predicts a second movement trajectory of the person in a second period after the first period based on the specified first movement trajectory, and specifies a third movement trajectory that indicates an actual movement trajectory of the person in the second period by analyzing the acquired video, and
the processing of generating the heat map generates the heat map that indicates an error between the second movement trajectory and the third movement trajectory for each region.

4. The information processing program according to claim 3, the processing further comprising:
extracting a first attention region in which an error satisfies a predetermined condition and a person in the first attention region, based on the heat map;
specifying a first behavior of the person, based on skeleton information of the person in the extracted first attention region; and
causing the electronic device positioned in the first attention region to execute processing regarding environment setting associated with a predetermined behavior, in a case where a first behavior of the specified person is the predetermined behavior.

5. The information processing program according to claim 4, the processing further comprising:
generating the information regarding the environment setting in the facility, by inputting the first behavior of the person in the first attention region into a machine learning model trained based on a plurality of pieces of training data in which a behavior of a person and information regarding environment setting are set as a pair;
specifying a second behavior of the person, by analyzing a video that includes the person in the first attention region, after the processing regarding the environment setting has been executed by the electronic device; and
retraining the machine learning model based on remaining training data obtained by excluding training data that corresponds to the pair of the first behavior and the information regarding the environment setting, from the plurality of pieces of training data, in a case where the specified second behavior of the person is not a predetermined behavior.

6. An information processing method implemented by a computer, the information processing method comprising:
acquiring a video imaged in a facility;
tracking a trajectory of a person in the facility, by analyzing the acquired video;
generating a heat map regarding the trajectory of the person in the facility, based on the tracked trajectory of the person;
generating information regarding environment setting in the facility, based on the generated heat map and position information of an electronic device disposed in the facility; and
causing the electronic device to execute processing regarding the environment setting, based on the information regarding the environment setting.

7. An information processing apparatus comprising a control unit configured to perform processing comprising:
acquiring a video imaged in a facility;
tracking a trajectory of a person in the facility, by analyzing the acquired video;
generating a heat map regarding the trajectory of the person in the facility, based on the tracked trajectory of the person;
generating information regarding environment setting in the facility, based on the generated heat map and position information of an electronic device disposed in the facility; and
causing the electronic device to execute processing regarding the environment setting, based on the information regarding the environment setting.
